# FASCICULE DE BREVET EUROPEEN

(11) **EP 3 320 481 B1**
(45) Date de publication et mention de la délivrance du brevet: **18.01.2023**
(21) Numéro de dépôt: 16734657.6
(22) Date de dépôt: 04.07.2016
(51) Int. Cl.: G06V 20/64, G06V 40/12, G06V 40/40

(54) **PROCÉDÉ DE VÉRIFICATION DE LA VÉRACITÉ D'UN DOIGT**
VERFAHREN ZUR VERIFIZIERUNG DER VERAZITÄT EINES FINGERS
METHOD FOR VERIFYING THE VERACITY OF A FINGER

(30) Priorité: 09.07.2015 FR 1556531
(43) Date de publication de la demande: 16.05.2018
(73) Titulaire: Idemia Identity & Security France, 92400 Courbevoie (FR)
(72) Inventeur: MORICEAU, Damien, 92130 Issy Les Moulineaux (FR); JOURDAS, Cécile, 92130 Issy Les Moulineaux (FR)
(74) Mandataire: Idemia
(86) Numéro de dépôt international: PCT/EP2016/065738
(87) Numéro de publication internationale: WO 2017/005703

(56) Documents cités:
- WO-A2-2010/036403
- US-A1- 2014 049 373
- David Zhang ET AL: "3D Fingerprint Reconstruction" In: "3D Biometrics", 1 janvier 2013 (2013-01-01), Springer New York, New York, NY, XP055274963, ISBN: 978-1-4614-7400-5 pages 195-216, DOI: 10.1007/978-1-4614-7400-5_11, le document en entier
- David Zhang ET AL: "3D Fingerprint Identification System" In: "3D Biometrics", 1 janvier 2013 (2013-01-01), Springer New York, New York, NY, XP055274965, ISBN: 978-1-4614-7400-5 pages 217-230, DOI: 10.1007/978-1-4614-7400-5_12, whole document, in particular section 12.3.2
- J MATIAS DI MARTINO ET AL: "3D curvature analysis with a novel one-shot technique", THE INSTITUTE OF ELECTRICAL AND ELECTRONICS ENGINEERS, INC. (IEEE) CONFERENCE PROCEEDINGS, 1 octobre 2014 (2014-10-01), page 3818, XP055274533, Piscataway
- EMANUELA MARASCO ET AL: "A Survey on Anti-Spoofing Schemes for Fingerprint RecognitionSystems", ACM COMPUTING SURVEYS., vol. 47, no. 2, 1 septembre 2014 (2014-09-01), pages A1-A36, XP055229904, US ISSN: 0360-0300, DOI: 10.1145/0000000.0000000

## Description

La présente invention concerne un procédé de vérification de la véracité d'un ou plusieurs doigts, ainsi qu'un dispositif de vérification adapté à mettre en œuvre un tel procédé de vérification.

Elle trouve application dans le domaine de la reconnaissance biométrique et en particulier dans le domaine de l'identification par analyse des empreintes d'un doigt.

Dans le cadre d'une identification/authentification d'une personne par analyse de son empreinte digitale, il est préférable de s'assurer que le doigt est un vrai doigt et non un leurre présenté dans le but de tromper le système d'identification/authentification.

Il existe de nombreuses solutions permettant de vérifier que le doigt est véritablement un doigt.

Un type de fraude particulier consiste à coller ou plaquer une couche supplémentaire sur le doigt. Cette couche peut être par exemple une couche en latex, en silicone, en gélatine ou encore une feuille imprimée enroulée ou juste posée sur le doigt.

Le document US-A-2014/049373 et le document WO-A-2010/036403 divulguent des procédés de vérification de la véracité d'un doigt en s'appuyant sur une reconstruction tridimensionnelle du doigt à partir de franges projetées puis une analyse de cette reconstruction. De tels procédés nécessitent donc des temps de calcul relativement longs du fait de la reconstruction.

En particulier, l'utilisation des procédés des documents cités ci-dessus nécessite une calibration précise entre le projecteur et la caméra.

Le document US-A-2014/049373 propose en particulier l'analyse de caractéristiques tridimensionnelles ([0048), et bidimensionnelles ([0049]). Dans ce dernier cas, il n'y a pas de projection d'une mire, mais projection d'un flux de lumière d'une couleur particulière.

Il est intéressant de trouver une solution plus rapide et adaptée pour détecter de telles fraudes en particulier en se basant sur des données bidimensionnelles.

Un objet de la présente invention est de proposer un procédé de vérification de la véracité d'un doigt qui ne présente pas les inconvénients de l'art antérieur et qui, en particulier, permet d'assurer une meilleure détection d'un leurre dans le cas d'un dispositif de vérification sans contact.

A cet effet, est proposé un procédé de vérification de la véracité d'un doigt par un dispositif de vérification comportant un dispositif de projection prévu pour projeter une mire constituée d'une pluralité de lignes parallèles entre elles sur le doigt et orthogonales à la direction longitudinale privilégiée du doigt, un dispositif de capture prévu pour capturer une image du doigt et de la mire, et une unité de traitement, le procédé comportant:
- une étape d'éclairage au cours de laquelle le dispositif de projection éclaire le doigt avec la mire,
- une étape de capture sans contact au cours de laquelle le dispositif de capture capture une image de mire de la mire projetée sur le doigt,
- une étape d'extraction de franges au cours de laquelle l'unité de traitement extrait des franges à partir de l'image de mire ainsi capturée,
- une étape de calcul de caractéristique au cours de laquelle l'unité de traitement calcule au moins une caractéristique relative à la structure physique des franges,
- une étape de comparaison au cours de laquelle l'unité de traitement compare la ou les caractéristiques ainsi calculées avec des valeurs de référence de ces caractéristiques, et
- une étape de prise de décision au cours de laquelle l'unité de traitement prend une décision concernant la véracité du doigt à partir du résultat de l'étape de comparaison

l'étape de calcul de caractéristique consiste à calculer, pour chaque frange et pour chaque point de ladite frange, la flèche audit point, puis à calculer, pour chaque frange, la variance des flèches ainsi calculées, puis à calculer sur l'ensemble des franges, la moyenne des variances des flèches ainsi calculées, la caractéristique physique calculée étant cette moyenne.

Un tel procédé ne nécessite donc pas de reconstruction tridimensionnelle du doigt et présente donc un gain de temps.

Avantageusement, l'axe optique du dispositif de projection et l'axe optique du dispositif de capture sont concourants.

Selon un autre mode de réalisation particulier, l'étape de calcul de caractéristique consiste en outre, d'abord à calculer, pour chaque frange et pour chaque point de ladite frange, la flèche audit point, puis à calculer, pour chaque frange, la moyenne des flèches ainsi calculées, puis sur l'ensemble des franges, à calculer la moyenne des moyennes des flèches ainsi calculées, et la caractéristique physique calculée est cette moyenne des moyennes.

Avantageusement, l'étape de calcul de caractéristique consiste en outre à calculer, pour chaque frange, les paramètres a, b et c de sa modélisation sous la forme x=ay²+by+c, puis sur l'ensemble des franges, à calculer la moyenne des paramètres 'a' ainsi calculés et la caractéristique physique calculée est cette moyenne.

Avantageusement, le procédé de vérification comporte entre l'étape d'extraction de franges et l'étape de calcul de caractéristique, une étape de binarisation suivie d'une étape de squelettisation, et l'étape de calcul de caractéristique consiste en outre calculer, pour chaque frange, les paramètres a, b et c de sa modélisation sous la forme x=ay²+by+c, puis pour chaque frange, à calculer, pour chaque point de ladite frange, l'erreur entre la frange réelle et la frange modélisée avec la formule (xᵢ-ayᵢ²-byᵢ-c)² où 'i' est l'indice du point de la frange considéré, puis, sur chaque frange, la moyenne de cette erreur, puis, sur l'ensemble des franges, à calculer la moyenne des erreurs moyennes ainsi calculées, et en ce que la caractéristique physique calculée est alors cette moyenne.

L'invention propose également un dispositif de vérification de la véracité d'un doigt, le dispositif de vérification comportant des moyens pour mettre en œuvre le procédé de vérification selon l'une des variantes précédentes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un dispositif de vérification de la véracité d'un doigt selon l'invention,
la Fig. 2 représente un algorithme d'un procédé de vérification de la véracité d'un doigt selon l'invention,
la Fig. 3a montre une image d'une mire projetée sur de vrais doigts,
la Fig. 3b montre une image d'une mire projetée sur une fraude papier,
la Fig. 3c montre une image d'une mire projetée sur une fraude latex,
la Fig. 4a montre une image des franges extraites à partir de l'image de la mire de la Fig. 3a,
la Fig. 4b montre une image des franges extraites à partir de l'image de la mire de la Fig. 3b,
la Fig. 4c montre une image des franges extraites à partir de l'image de la mire de la Fig. 3c,
la Fig. 5 est un exemple de frange,
la Fig. 6 montre un exemple d'implémentation du dispositif de vérification selon l'invention, et
la Fig. 7 montre un diagramme de résultats pour l'exemple d'implémentation de la Fig. 6.

Le principe de l'invention consiste d'abord à projeter sur le doigt une mire constituée de ligne parallèles entre elles et orthogonales à la direction longitudinale privilégiée du doigt, puis à capturer une image du doigt avec les lignes ainsi projetées, et à analyser la structures des lignes capturées sur l'image pour en déduire la véracité du doigt.

Ainsi, lorsqu'une couche supplémentaire est accolée au doigt, cela entraîne une surépaisseur et une discontinuité entre la surface du doigt et la surface de la couche et la détection d'une telle discontinuité permet de détecter la fraude. Dans ce cas, certaines lignes vont présenter une discontinuité.

En outre, lorsque le leurre consiste en une feuille de papier simplement posée sur le doigt, les lignes projetées seront rectilignes alors que dans le cas d'un doigt, elles présenteront une certaine courbure.

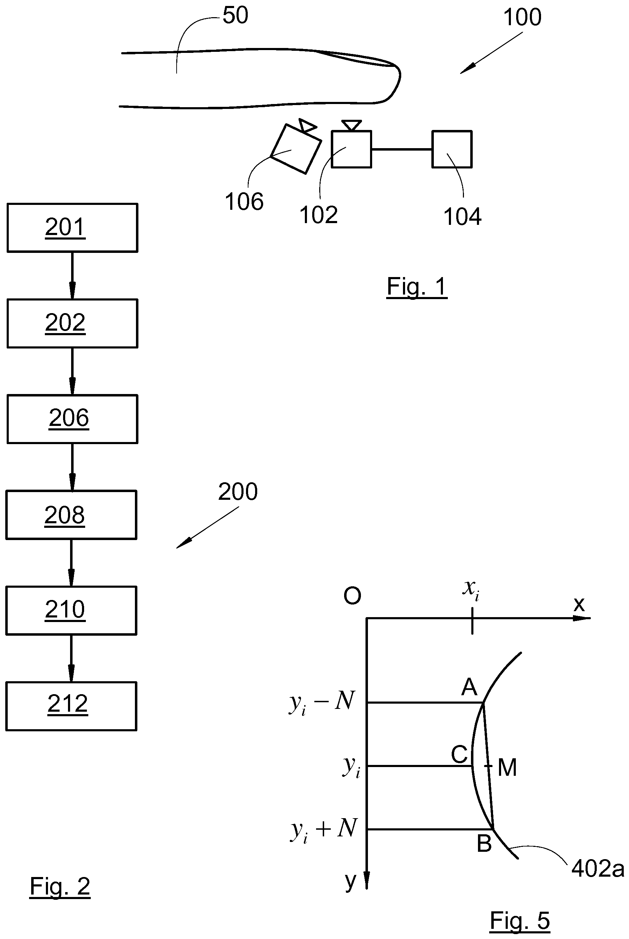

La Fig. 1 montre un dispositif de vérification 100 destiné à vérifier si le doigt 50 est un vrai doigt ou non.

Le dispositif de vérification 100 comporte un dispositif de projection 106 prévu pour projeter une mire 52 constituée d'une pluralité de lignes parallèles sur le doigt 50, un dispositif de capture 102 prévu pour capturer une image du doigt 50 et de la mire 52 et une unité de traitement 104.

Le dispositif de capture 102 comporte au moins un moyen de capture comme par exemple une caméra.

Le dispositif de capture 102 capture sans contact une image de la mire 52 ainsi projetée sur le doigt 50. L'image de mire 302a-c est une image numérique.

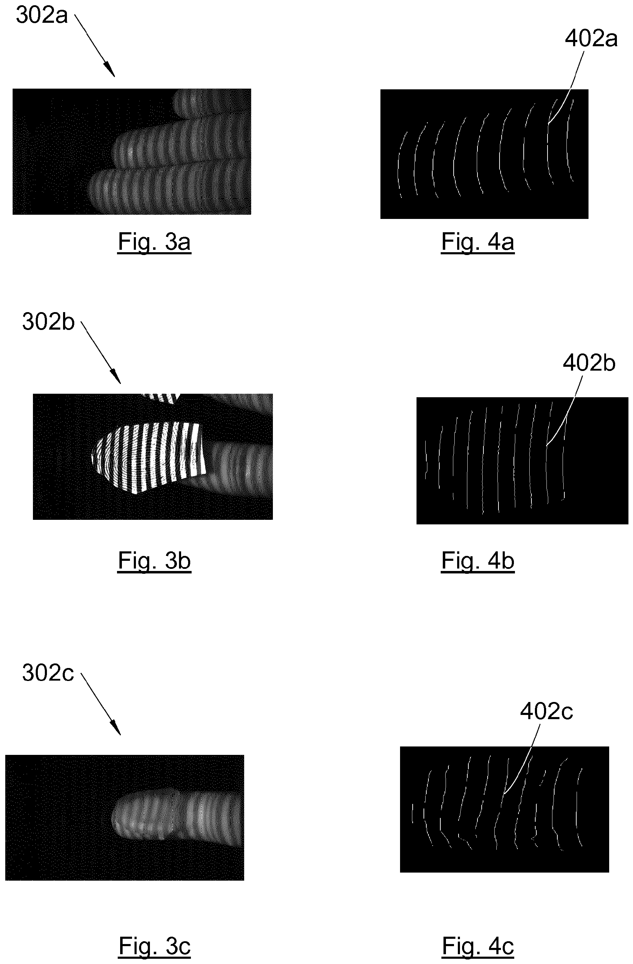

La Fig. 3a montre une image de mire 302a pour un vrai doigt 50.

La Fig. 3b montre une image de mire 302b pour un doigt 50 recouvert d'une fraude papier.

La Fig. 3c montre une image de mire 302c pour un doigt 50 recouvert d'une fraude latex.

L'unité de traitement 104 extrait les franges de l'image de mire 302a-c ainsi obtenue.

La Fig. 4a montre une image de franges 402a calculée à partir de l'image de mire 302a.

La Fig. 4b montre une image de franges 402b calculées à partir de l'image de mire 302b.

La Fig. 4c montre une image de franges 402c calculées à partir de l'image de mire 302c.

L'analyse des franges 402a-c montre clairement que les fraudes peuvent être détectées à partir de la structure physique desdites franges 402a-c. Les franges 402a d'un vrai doigt 50 sont courbes, tandis que les franges 402b d'un leurre papier sont rectilignes et certaines franges 402c d'un leurre silicone sont irrégulières à cause de la marche entre les surfaces du doigt 50 et la couche de latex.

La Fig. 2 montre un algorithme d'un procédé de vérification 200 de la validité d'un doigt 50 mis en œuvre par le dispositif de vérification 100.

Le procédé de vérification 200 comporte:
- une étape d'éclairage 201 au cours de laquelle le dispositif de projection 106 éclaire le doigt 50 avec la mire 52,
- une étape de capture 202 au cours de laquelle le dispositif de capture 102 capture une image de mire 302a-c de la mire 52 projetée sur le doigt 50,
- une étape d'extraction de franges 206 au cours de laquelle l'unité de traitement 104 extrait les franges 402a-c à partir de l'image de mire 302a-c ainsi capturée,
- une étape de calcul de caractéristique 208 au cours de laquelle l'unité de traitement 104 calcule au moins une caractéristique relative à la structure physique des franges 402a-c,
- une étape de comparaison 210 au cours de laquelle l'unité de traitement 104 compare la ou les caractéristiques ainsi calculées avec des valeurs de référence de ces caractéristiques, et
- une étape de prise de décision 212 au cours de laquelle l'unité de traitement 104 prend une décision concernant la véracité du doigt 50 à partir du résultat de l'étape de comparaison 210.

La mire 52 est de préférence d'une seule couleur pour permettre d'acquérir sur d'autres canaux une information supplémentaire, par exemple l'empreinte digitale du doigt sous éclairage uniforme. L'étape d'extraction de franges 206 consiste par exemple à extraire les franges correspondantes aux fronts noir/blanc ou blanc/noir de l'image de mire.

Selon un mode de réalisation particulier de l'invention, l'étape d'extraction de franges 206 consiste à partir de l'image de mire 302a-c, par exemple à appliquer un filtre de Canny-Deriche horizontal afin d'en extraire les franges 402a-c. Il est également possible de mettre en œuvre une détection de contour horizontal de type Sobel, Prewitt ou toute autre méthode appropriée de traitement d'image en particulier un filtrage dans l'espace de Fourier.

Afin de faciliter le traitement ultérieur des franges 402a-c au cours de l'étape de calcul de caractéristique 208, l'image des franges 402a-c est binarisée. La binarisation est effectuée par exemple à l'aide de la méthode de OTSU suivie d'une étape de squelettisation. Le procédé comporte alors entre l'étape d'extraction de franges 206 et l'étape de calcul de caractéristique 208, une étape de binarisation suivie d'une étape de squelettisation.

Afin d'obtenir des résultats plus pertinents, il est préférable d'éliminer les éléments de l'image qui ne constituent pas de manière certaines des franges 402a-c mais sont des éléments autres issus par exemple des erreurs optiques ou de segmentation du doigt. En outre, il est aussi préférable de s'assurer que les franges n'ont pas été morcelées aux abords de discontinuités dans le doigt. Ainsi, des critères d'orientation, de longueur, dans le premier cas, et de proximité dans le second cas permettent respectivement d'éliminer ou de recoller des morceaux de franges. Préférentiellement, les franges ne sont conservées que dans une zone englobant grossièrement la première phalange du doigt.

Dans le cas où l'image de mire 302a-c porte sur plusieurs doigts, il est préférable d'isoler chaque doigt à l'aide d'une étape de segmentation préalablement à l'étape d'extraction. L'étape de segmentation peut par exemple être réalisée à l'aide d'un algorithme OTSU appliqué sur l'image sous-échantillonnée.

Les caractéristiques physiques sont liées à la forme des franges ou aux irrégularités des franges.

La forme des franges permet de différencier un vrai doigt 50 d'un leurre papier (Fig. 4b). La présence d'aspérités permet de différencier un vrai doigt 50 d'un leurre latex en surépaisseur (Fig. 4c).

La Fig. 5 montre un exemple d'une frange 402a telle qu'elle a été extraite lors de l'étape d'extraction dans un repère (O, x, y), où x est parallèle à l'axe longitudinal du doigt et où y est un axe transversal au doigt dans le plan de l'image de mire 302a. Certaines caractéristiques qui sont décrites ci-après sont basées sur les flèches qui peuvent être calculées à partir des franges 402a-c.

Le point C (xᵢ, yᵢ) est un point de la frange 402a. Les points A et B sont des points symétriques de la frange 402a ayant respectivement pour ordonnée yi-N et yᵢ+N, où N est un nombre de pixels relativement faible et fixe qui est par exemple de l'ordre de 5 à 10 pixels. M est le milieu du segment [A, B] et la flèche est la distance signée d(C, M).

Selon un mode de réalisation particulier, l'étape de calcul de caractéristique 208 consiste d'abord à calculer, pour chaque frange 402a-c et pour chaque point de ladite frange 402a-c, la flèche audit point, puis à calculer, pour chaque frange 402a-c, la variance des flèches ainsi calculées, puis à calculer sur l'ensemble des franges 402a-c, la moyenne des variances des flèches ainsi calculées. La caractéristique physique calculée est alors cette moyenne des variances ou de la même manière la moyenne normalisée de la variance des flèches.

Selon un autre mode de réalisation particulier, l'étape de calcul de caractéristique 208 consiste d'abord à calculer, pour chaque frange 402a-c et pour chaque point de ladite frange 402a-c, la flèche audit point, puis à calculer, pour chaque frange 402a-c, la moyenne des flèches ainsi calculées, puis sur l'ensemble des franges 402a-c, à calculer la moyenne des moyennes des flèches ainsi calculées. La caractéristique physique calculée est alors cette moyenne des moyennes.

Selon un autre mode de réalisation particulier, chaque frange 402a-c peut être modélisée sous la forme parabolique x=ay²+by+c, l'étape de calcul de caractéristique 208 consiste alors à calculer, pour chaque frange 402a-c, les paramètres a, b et c de sa modélisation, puis sur l'ensemble des franges 402a-c, à calculer la moyenne des paramètres 'a' ainsi calculés. La caractéristique physique calculée est alors cette moyenne.

Selon un autre mode de réalisation, chaque frange 402a-c peut être modélisée sous la forme parabolique x=ay²+by+c, l'étape de calcul de caractéristique 208 consiste alors à calculer, pour chaque frange 402a-c, les paramètres a, b et c de sa modélisation. L'étape de calcul de caractéristique 208 consiste alors à calculer, pour chaque frange 402a-c, les paramètres a, b et c de sa modélisation, puis pour chaque frange 402a-c, à calculer, pour chaque point de ladite frange 402a-c, l'erreur entre la frange 402a-c réelle et la frange modélisée avec la formule (xᵢ-ayᵢ²-byᵢ-c)² où 'i' est l'indice du point de la frange considéré, puis, sur chaque frange 402a-c, la moyenne de cette erreur, puis, sur l'ensemble des franges 402a-c, à calculer la moyenne des erreurs moyennes ainsi calculées. La caractéristique physique calculée est alors cette moyenne. Les valeurs xᵢ et yᵢ sont les coordonnées du point d'indice 'i' de la frange considérée et qui sont obtenues après l'étape de binarisation et l'étape de squelettisation.

Comme précisé à l'étape de calcul de caractéristique 208, il est possible de calculer une ou plusieurs des caractéristiques décrites ci-dessus.

L'étape de comparaison 210 consiste alors à comparer la valeur de chaque caractéristique à des valeurs de référence de ces caractéristiques.

L'étape de comparaison peut être mise en œuvre par tous moyens de comparaison appropriés comme par exemple un réseau de neurones, une machine à vecteur de support (SVM) ou un arbre de décision.

Les moyens de comparaison nécessitent classiquement une phase d'apprentissage au cours de laquelle des vrais doigts 50 et des doigts 50 recouverts de leurres sont présentés devant au dispositif de vérification 100 qui calcule les caractéristiques particulières à relever. A la suite de cette phase d'apprentissage, les moyens de comparaison sont aptes à classer chaque nouveau doigt 50 qui lui est présenté comme un vrai doigt ou un faux doigt. Alternativement, l'apprentissage peut être effectué avec uniquement des vrais doigts et un algorithme de type SVM one class.

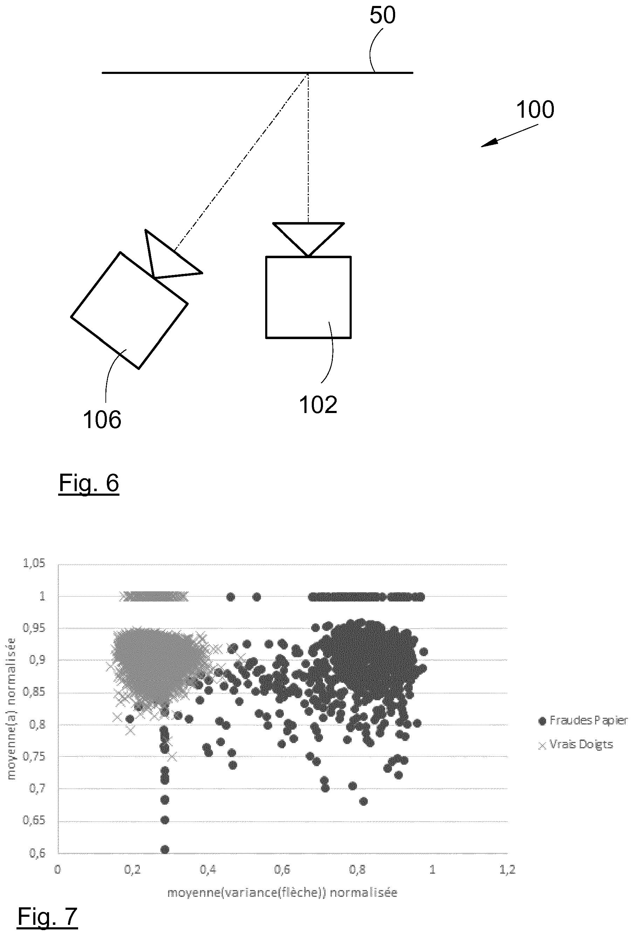

La Fig. 6 montre un exemple de mise en œuvre d'un dispositif de vérification 100 avec une caméra 102 et un dispositif de projection 106 où le doigt 50 est à l'intersection des axes optiques de la caméra 102 et du dispositif de projection 106 qui ne sont pas parallèles.

D'une manière générale, l'axe optique du dispositif de projection 106 et l'axe optique du dispositif de capture 102, ici la caméra 102, sont concourants.

Dans le mode de réalisation de l'invention présenté sur la Fig. 1, le point d'intersection des axes est dans un volume de capture qui est relativement large du fait que l'acquisition se fait sans contact. Le volume de capture est le volume qui se trouve en regard du dispositif de capture 102 dans lequel le doigt 50 peut se positionner librement tout en garantissant que l'image capturée soit nette. En effet, classiquement, dans un tel cas, le doigt 50 présente une certaine liberté de positionnement par rapport au dispositif de capture 102, selon un exemple particulier, le point d'intersection se situe à +/- 10 cm de la surface du doigt 50, préférentiellement à +/- 5 cm et encore plus préférentiellement à +/- 2,5 cm. En d'autres termes, on peut dire que l'axe optique du dispositif de projection 106 et l'axe optique du dispositif de capture 102, ici la caméra 102, sont concourants au niveau de la surface du doigt 50.

La caméra 102 est ici une caméra full HD avec une focale de 12,5mm et une résolution de l'ordre de 600 dpi. La distance entre le doigt 50 et la caméra 102 est de l'ordre de 200 mm.

L'angle entre l'axe optique de la caméra 102 et l'axe optique du dispositif de projection 106 est compris entre 10° à 60°, préférentiellement entre 20° et 40°, plus préférentiellement, il est égale à 26°.

Avec une telle implantation, il y a entre 1 et 30 franges selon la longueur du doigt 50, et pour la plupart des cas, entre 10 et 20.

Comme précisé ci-dessus avec N choisi entre 5 et 10 pixels, avec des lignes projetées de 1,6 mm de largeur et espacées de 1,6 mm et avec un classifieur SVM noyau RBF, les résultats représentés sur la Fig. 7.

La Fig. 7 montre une combinaison de de deux analyses combinées à savoir en abscisse la moyenne normalisée de la variance des flèches et en ordonnée la moyenne normalisée des paramètres 'a' de la forme parabolique.

Les résultats de la Fig. 7 montrent la détection de fraudes papier (Fig. 3b) par rapport à de vrais doigts, avec 84% de détection de fraude et 1% de faux rejets (vrais doigts détectés comme fraude). Sur la Fig. 7, les échantillons représentés par des croix représentent les vrais doigts et sont rassemblés en partie haute et à gauche, et les échantillons représentés par des points représentent les fraudes papier et sont rassemblés en partie haute et à droite.

## Revendications

1. Procédé de vérification (200) de la véracité d'un doigt (50) par un dispositif de vérification (100) comportant un dispositif de projection (106) prévu pour projeter une mire (52) constituée d'une pluralité de lignes parallèles entre elles sur le doigt (50) et orthogonales à la direction longitudinale privilégiée du doigt (50), un dispositif de capture (102) prévu pour capturer une image du doigt (50) et de la mire (52), et une unité de traitement (104), le procédé comportant:
- une étape d'éclairage (201) au cours de laquelle le dispositif de projection (106) éclaire le doigt (50) avec la mire (52),
- une étape de capture (202) sans contact au cours de laquelle le dispositif de capture (102) capture une image de mire (302a-c) de la mire (52) projetée sur le doigt (50),
- une étape d'extraction de franges (206) au cours de laquelle l'unité de traitement (104) extrait des franges (402a-c) à partir de l'image de mire (302a-c) ainsi capturée,
- une étape de calcul de caractéristique (208) au cours de laquelle l'unité de traitement (104) calcule au moins une caractéristique relative à la structure physique des franges (402a-c),
- une étape de comparaison (210) au cours de laquelle l'unité de traitement (104) compare la ou les caractéristiques ainsi calculées avec des valeurs de référence de ces caractéristiques, et
- une étape de prise de décision (212) au cours de laquelle l'unité de traitement (104) prend une décision concernant la véracité du doigt (50) à partir du résultat de l'étape de comparaison (210),
l'étape de calcul de caractéristique (208) consistant à calculer, pour chaque frange (402a-c) et pour chaque point de ladite frange (402a-c), la flèche audit point, puis à calculer, pour chaque frange (402a-c), la variance des flèches ainsi calculées, puis à calculer sur l'ensemble des franges (402a-c), la moyenne des variances des flèches ainsi calculées, la caractéristique physique calculée étant cette moyenne

2. Procédé de vérification (200) selon la revendication 1, **caractérisé en ce que** l'axe optique du dispositif de projection (106) et l'axe optique du dispositif de capture (102) sont concourants.

3. Procédé de vérification (200) selon l'une des revendications 1 ou 2, **caractérisé en ce que** l'étape de calcul de caractéristique (208) consiste en outre, d'abord à calculer, pour chaque frange (402a-c) et pour chaque point de ladite frange (402a-c), la flèche audit point, puis à calculer, pour chaque frange (402a-c), la moyenne des flèches ainsi calculées, puis sur l'ensemble des franges (402a-c), à calculer la moyenne des moyennes des flèches ainsi calculées, et **en ce que** la caractéristique physique calculée est cette moyenne des moyennes.

4. Procédé de vérification (200) selon l'une des revendications précédentes, **caractérisé en ce que** l'étape de calcul de caractéristique (208) consiste en outre à calculer, pour chaque frange (402a-c), les paramètres a, b et c de sa modélisation sous la forme x=ay²+by+c, puis sur l'ensemble des franges (402a-c), à calculer la moyenne des paramètres 'a' ainsi calculés et **en ce que** la caractéristique physique calculée est cette moyenne.

5. Procédé de vérification (200) selon l'une des revendications précédentes, **caractérisé en ce qu'**il comporte entre l'étape d'extraction de franges (206) et l'étape de calcul de caractéristique (208), une étape de binarisation suivie d'une étape de squelettisation, et **en ce que** l'étape de calcul de caractéristique (208) consiste en outre calculer, pour chaque frange (402a-c), les paramètres a, b et c de sa modélisation sous la forme x=ay²+by+c, puis pour chaque frange (402a-c), à calculer, pour chaque point de ladite frange (402a-c), l'erreur entre la frange (402a-c) réelle et la frange modélisée avec la formule (xᵢ-ayᵢ²-byᵢ-c)² où 'i' est l'indice du point de la frange considéré, puis, sur chaque frange (402a-c), la moyenne de cette erreur, puis, sur l'ensemble des franges (402a-c), à calculer la moyenne des erreurs moyennes ainsi calculées, et **en ce que** la caractéristique physique calculée est alors cette moyenne.

6. Dispositif de vérification (100) de la véracité d'un doigt (50), le dispositif de vérification (100) comportant des moyens pour mettre en œuvre le procédé de vérification (200) selon l'une des revendications précédentes.

## Patentansprüche

1. Verifizierungsverfahren (200) zur Verifizierung der Richtigkeit eines Fingers (50) durch eine Verifizierungsvorrichtung (100), die eine Projektionsvorrichtung (106), die vorgesehen ist, ein aus einer Vielzahl von zueinander parallelen und zur bevorrechtigten Längsrichtung des Fingers (50) orthogonalen Linien bestehendes Testmuster (52) auf den Finger (50) zu projizieren, eine Aufnahmevorrichtung (102), die vorgesehen ist, ein Bild des Fingers (50) und des Testmusters (52) aufzunehmen, und eine Verarbeitungseinheit (104) aufweist, wobei das Verfahren aufweist:
- einen Beleuchtungsschritt (201), während dessen die Projektionsvorrichtung (106) den Finger (50) mit dem Testmuster (52) beleuchtet,
- einen Schritt der kontaktlosen Aufnahme (202), während dessen die Erfassungsvorrichtung (102) ein Testmusterbild (302a-c) des auf den Finger (50) projizierten Testmusters (52) aufnimmt,
- einen Entnahmeschritt von Streifen (206), während dessen die Verarbeitungseinheit (104) ausgehend vom so aufgenommenen Testmusterbild (302a-c) Streifen (402a-c) entnimmt,
- einen Merkmalsberechnungsschritt (208), während dessen die Verarbeitungseinheit (104) mindestens ein Merkmal bezüglich der physikalischen Struktur der Streifen (402a-c) berechnet,
- einen Vergleichsschritt (210), während dessen die Verarbeitungseinheit (104) das oder die so berechneten Merkmale mit Bezugswerten dieser Merkmale vergleicht, und
- einen Entscheidungsfindungsschritt (212), während dessen die Verarbeitungseinheit (104) eine Entscheidung betreffend die Richtigkeit des Fingers (50) ausgehend vom Ergebnis des Vergleichsschritts (210) trifft,
wobei der Merkmalsberechnungsschritt (208) darin besteht, für jeden Streifen (402a-c) und für jeden Punkt des Streifens (402a-c) die Durchbiegung an dem Punkt zu berechnen, dann für jeden Streifen (402a-c) die Varianz der so berechneten Durchbiegungen zu berechnen, dann für die Gesamtheit der Streifen (402a-c) den Mittelwert der Varianzen der so berechneten Durchbiegungen zu berechnen, wobei das berechnete physikalische Merkmal dieser Mittelwert ist.

2. Verifizierungsverfahren (200) nach Anspruch 1, **dadurch gekennzeichnet, dass** die optische Achse der Projektionsvorrichtung (106) und die optische Achse der Erfassungsvorrichtung (102) sich schneiden.

3. Verifizierungsverfahren (200) nach einem der Ansprüche 1 oder 2, **dadurch gekennzeichnet, dass** der Schritt der Merkmalsberechnung (208) außerdem zunächst darin besteht, für jeden Streifen (402a-c) und für jeden Punkt des Streifens (402a-c) die Durchbiegung an dem Punkt zu berechnen, dann für jeden Streifen (402a-c) den Mittelwert der so berechneten Durchbiegungen zu berechnen, dann für die Gesamtheit der Streifen (402a-c) den Mittelwert der Mittelwerte der so berechneten Durchbiegungen zu berechnen, und dass das berechnete physikalische Merkmal dieser Mittelwert der Mittelwerte ist.

4. Verifizierungsverfahren (200) nach einem der vorhergehenden Ansprüche, **dadurch gekennzeichnet, dass** der Schritt der Merkmalsberechnung (208) außerdem darin besteht, für jeden Streifen (402a-c) die Parameter a, b und c seiner Modellierung in der Form x=ay²+by+c zu berechnen, dann für die Gesamtheit der Streifen (402a-c) den Mittelwert der so berechneten Parameter 'a' zu berechnen, und dass das berechnete physikalische Merkmal dieser Mittelwert ist.

5. Verifizierungsverfahren (200) nach einem der vorhergehenden Ansprüche, **dadurch gekennzeichnet, dass** es zwischen dem Schritt der Entnahme von Streifen (206) und dem Schritt der Merkmalsberechnung (208) einen Schritt der Binarisierung gefolgt von einem Schritt der Skelettierung aufweist, und dass der Schritt der Merkmalsberechnung (208) außerdem darin besteht, für jeden Streifen (402a-c) die Parameter a, b und c seiner Modellierung in der Form x=ay²+by+c zu berechnen, dann für jeden Streifen (402a-c) für jeden Punkt des Streifens (402a-c) den Fehler zwischen dem realen Streifen (402a-c) und dem modellisierten Streifen mit der Formel (xᵢ-ayᵢ²-byᵢ-c)² zu berechnen, wobei 'i' der Index des betrachteten Punkts des Streifens ist, dann für jeden Streifen (402a-c) den Mittelwert dieses Fehlers zu berechnen, dann für die Gesamtheit der Streifen (402a-c) den Mittelwert der so berechneten mittleren Fehler zu berechnen, und dass das berechnete physikalische Merkmal dann dieser Mittelwert ist.

6. Verifizierungsvorrichtung (100) zur Verifizierung der Richtigkeit eines Fingers (50), wobei die Verifizierungsvorrichtung (100) Einrichtungen aufweist, um das Verifizierungsverfahren (200) nach einem der vorhergehenden Ansprüche durchzuführen.

## Claims

1. Verification method (200) for verifying the veracity of a finger (50) by a verification device (100) comprising a projection device (106) designed to project a pattern (52) composed of a plurality of lines which are parallel to one another on the finger (50) and orthogonal to the favoured longitudinal direction of the finger (50), a capture device (102) designed to capture an image of the finger (50) and of the pattern (52), and a processing unit (104), the method comprising:
- an illumination step (201) during which the projection device (106) illuminates the finger (50) with the pattern (52),
- a contactless capture step (202) during which the capture device (102) captures a pattern image (302a-c) of the pattern (52) projected onto the finger (50),
- a fringe extraction step (206) during which the processing unit (104) extracts fringes (402a-c) from the duly captured pattern image (302a-c),
- a feature calculation step (208) during which the processing unit (104) calculates at least one feature relating to the physical structure of the fringes (402a-c),
- a comparison step (210) during which the processing unit (104) compares the duly calculated feature or features with reference values of these features, and
- a decision-making step (212) during which the processing unit (104) makes a decision concerning the veracity of the finger (50) based on the result of the comparison step (210),
the feature calculation step (208) consisting in calculating, for each fringe (402a-c) and for each point of said fringe (402a-c), the sagitta at said point, then in calculating, for each fringe (402a-c), the variance of the sagittas thus calculated, then in calculating, over all of the fringes (402a-c), the average of the variances of the sagittas thus calculated, the calculated physical feature being this average.

2. Verification method (200) according to Claim 1, **characterized in that** the optical axis of the projection device (106) and the optical axis of the capture device (102) intersect.

3. Verification method (200) according to either of Claims 1 and 2, **characterized in that** the feature calculation step (208) further consists, first of all in calculating, for each fringe (402a-c) and for each point of said fringe (402a-c), the sagitta at said point, then in calculating, for each fringe (402a-c), the average of the sagittas thus calculated, then, over all of the fringes (402a-c), in calculating the average of the averages of the sagittas thus calculated, and **in that** the calculated physical feature is this average of the averages.

4. Verification method (200) according to one of the preceding claims, **characterized in that** the feature calculation step (208) further consists in calculating, for each fringe (402a-c), the parameters a, b and c of the modelling thereof in the form x = ay² + by + c, then, over all of the fringes (402a-c), in calculating the average of the "a" parameters thus calculated and **in that** the calculated physical feature is this average.

5. Verification method (200) according to one of the preceding claims, **characterized in that** it comprises, between the fringe extraction step (206) and the feature calculation step (208), a binarization step followed by a skeletonization step, and **in that** the feature calculation step (208) further consists in calculating, for each fringe (402a-c), the parameters a, b and c of the modelling thereof in the form x = ay² + by + c, then, for each fringe (402a-c), in calculating, for each point of said fringe (402a-c), the error between the real fringe (402a-c) and the modelled fringe with the formula (xᵢ - ayᵢ² - byi - c)² in which "i" is the index of the point of the fringe considered, then, on each fringe (402a-c), the average of this error, then, over all of the fringes (402a-c), in calculating the average of the average errors thus calculated, and **in that** the calculated physical feature is then this average.

6. Verification device (100) for verifying the veracity of a finger (50), the verification device (100) comprising means for implementing the verification method (200) according to one of the preceding claims.
